# EUROPEAN PATENT APPLICATION

(11) **EP 1 840 446 A1**
(43) Date of publication of application: **03.10.2007**
(21) Application number: 07251301.3
(22) Date of filing: 27.03.2007
(51) Int. Cl.: F16M 11/04, F16M 11/18

(54) **Display extension apparatus**

(30) Priority: 27.03.2006 KR 20060027469
(71) Applicant: Samsung Electro-Mechanics Co., Ltd, Yeongtong-gu Suwon-si Gyeonggi-do 443-743 (KR)
(72) Inventor: Choi, Dong-Won, Suwon-si Gyeonggi-do 443-755 (KR); Lee, Chil-Sung, Suwon-si Gyeonggi-do 441-758 (KR); Park, Kyoung-Shin, Suwon-si Gyeonggi-do 443-756 (KR); Kim, Jae-Kyung, Ansan-si Gyeonggi-do 426-150 (KR)
(74) Representative: Mounteney, Simon James

(57) **Abstract**

A display extension apparatus is disclosed. The present invention provides a display extension apparatus including a support (11), a link portion (10) having one end coupled to a support, a driving part (19) coupled to a joining point of the link portion (10), and a movable body (12) coupled to the other end of the link portion, such that the movable body (12) is separated from the support (11) in accordance with the driving of the link portion (10).

## Description

### Field of the Invention

The present invention relates to a display extension apparatus.

### Background of the Invention

Flat panel displays encompass a number of technologies, such as Liquid Crystal Displays (LCDs), Plasma Display Panels (PDPs), and Light Emitting Diode (LED) displays, that are now commonly applied to televisions and video displays.

Flat panel displays are gradually replacing Cathode Ray Tubes (CRTs) monitors or televisions for reasons that flat panel displays are much lighter and thinner thereby providing the advantage of space saving.

LCD TV and PDP TV are also commonly installed or mounted on a wall - often referred to as "wall mounted TV" - to provide a wide viewing angle for the viewers. However, when the TV is installed on the wall, the viewer might not obtain a good view of the screen as he moves to different locations in a room. Due to the narrow distance between the back of the wall mounted TV and the wall, it is difficult to adjust the direction of orientation of the TV screen to accommodate the viewer's position. One way of solving this problem is to permanently increase the distance between the back of the TV and the wall. However, this would then defeat the advantage of space saving provided by the wall mounted TV.

### Summary of the Invention

An aspect of the present invention is to provide a display extension apparatus, which allows a maximum viewing angle even when the location of a viewer is changed while providing the advantageous space saving provided by flat panel displays.

One aspect of the present invention provides a display extension apparatus including a support, a link portion having one end coupled to the support, a driving part coupled to a joining point of the link portion, and a movable body coupled to the other end of the link portion such that the movable body is separated from the support in accordance with the driving of the link portion.

The link portion may include a first hinge member coupled to the support, a second hinge member coupled to the movable body, a first link element having one end rotatably coupled to the first hinge member, and a second link element having one end rotatably coupled to the second hinge member.

The driving part may include a motor unit and a rotary part coupled to a driving shaft of the motor unit, wherein the motor unit may be coupled to the first hinge member or the second hinge member, and the rotary part may be coupled to the first link element or the second link element to be in correspondence with the first link element or the second link element respectively.

The link portion may include a first guide member coupled to the support while separated from the first hinge member, and a second guide member coupled to the movable body while separated from the second hinge member, wherein the first link element and the second link element may intersect each other, with the other end of the first link element movably coupled to the second guide element, and the other end of the second link element movably coupled to the first guide element.

The driving part may include a motor unit and a driving part coupled to a driving shaft of the motor unit, wherein the motor unit may be coupled to the first link element or the second link element wherein the first link element and the second link element intersect, and the rotary part may be coupled to that one of the first link element or the second link element to which the motor unit is not coupled.

The driving part may include a motor unit and an extend portion coupled to a driving shaft of the motor unit and configured to extend along the length direction of the driving shaft according to the rotation of the motor unit, with the motor unit coupled to the first guide member or the second guide member, and the extend portion coupled to one end of the second link element or the other end of the first link element to be in correspondence with the first guide member or the second guide member respectively.

The link portion may include a third hinge member coupled to the support while separated from the first hinge member, a fourth hinge member coupled to the movable body while separated from the second hinge member, a third link element having one end rotatably coupled to the other end of the first link element by way of an interposed fifth hinge member and having the other end rotatably coupled to the fourth hinge member, and a fourth link element having one end rotatably coupled to the other end of the second link element by way of an interposed sixth hinge member and having the other end rotatably coupled to the third hinge member.

The display extension apparatus may further include a worm gear member coupled with the fifth hinge member and the sixth hinge member for adjusting the distance between the sixth hinge member and the fifth hinge member while rotating with the axis in the longitudinal direction.

The driving part may include a motor unit and a rotary part coupled to a driving shaft of the motor unit, where the rotary part may be coupled to the worm gear member.

The worm gear member may include a first rod having a worm gear formed on one end with the worm gear coupled with the fifth hinge member, a second rod having a worm gear formed on one end with the worm gear coupled with the sixth hinge member, and a tube having the other end of the first rod inserted in one end and having the other end of the second rod inserted in the other end, with a guide groove or a guide projection formed in the longitudinal direction along the inner perimeter of the tube, and a hole formed at the other end of the first rod and the other end of the second rod in correspondence with the guide projection.

In one embodiment, the display extension apparatus may further include a first gear coupled to the outer perimeter of the first hinge member, and a second gear coupled to the first gear and the outer perimeter of the third hinge member.

The display extension apparatus may further include a first gear coupled to the outer perimeter of the second hinge member, and a second gear coupled to the first gear and the outer perimeter of the fourth hinge member.

The first gear and the second gear may be coupled by an even number of idle gears.

The driving part may include a motor unit and a rotary part coupled to a driving shaft of the motor unit, wherein the rotary part may be coupled to the first gear or the second gear.

The rotary part may include a clutch unit coupled to the driving shaft and a driven shaft positioned in contact with the clutch unit, with the driving force of the motor unit smaller than the frictional force between the driven shaft and the clutch unit.

The driving part may include a motor unit and a rotary part coupled to a driving shaft of the motor unit, wherein the motor unit may be coupled to the other end of the first link element or one end of the third link element, and the rotary part may be coupled to that one of the one end of the third link element or the other end of the third link element to which the motor unit is not coupled.

The driving part may include a motor unit and a rotary part coupled to a driving shaft of the motor unit, wherein the motor unit may be coupled to the other end of the second link element or one end of the fourth link element, and the rotary part may be coupled to that one of the one end of the fourth link element or the other end of the second link element to which the motor unit is not coupled.

The rotary part may include a clutch unit coupled to the driving shaft and a driven shaft positioned in contact with the clutch unit, with the driving force of the motor unit smaller than the frictional force between the driven shaft and the clutch unit.

The frictional force between the driven shaft and the clutch unit may be smaller than the cogging torque of the motor unit.

The display extension may further include one or more washers interposed between the clutch unit and the driven shaft.

Additional aspects and advantages of the present invention will become apparent and more readily appreciated from the following description, including the appended drawings and claims, or may be learned by practice of the invention.

### Brief description of the drawings

These and/or other aspects and advantages of the present general inventive concept will become apparent and more readily appreciated from the following description of the embodiments, taken in conjunction with the accompanying drawings of which:
Fig. 1a is a plan view of a display extension apparatus in accordance with a first embodiment of the present invention;
Fig. 1b is a magnified sectional view of an intersection of a display extension apparatus of Fig 1a;
Fig. 1c illustrates the operation of a display extension apparatus in accordance with a first embodiment of the present invention;
Fig. 2a is a plan view of a display extension apparatus in accordance with a second embodiment of the present invention;
Fig. 2b illustrates the operation of a display extension apparatus in accordance with a second embodiment of the present invention;
Fig. 3a is a plan view of a display extension apparatus in accordance with a third embodiment of the present invention;
Fig. 3b illustrates the operation of a display extension apparatus in accordance with a third embodiment of the present invention;
Fig. 4a is a plan view of a display extension apparatus in accordance with a fourth disclosed embodiment of the present invention;
Fig. 4b illustrates the operation of a display extension apparatus in accordance with a fourth embodiment of the present invention;
Fig. 5a is a plan view of a display extension apparatus in accordance with a fifth embodiment of the present invention;
Fig. 5b is a plan view of a display extension apparatus in accordance with a fifth embodiment of the present invention;
Fig. 5c is a side view of a display extension apparatus illustrating the display extension apparatus being attached to a display in accordance with a fifth embodiment of the present invention;
Fig. 6 is a cross-sectional view of a rotary part of a driving part in accordance with a sixth embodiment of the present invention.

### Detailed description

The descriptions set forth below merely illustrate the principles of the present invention. Therefore, those skilled in the art could devise various methods and apparatus thereof which realise the principles of the present invention and which do not depart from the spirit and scope of the present invention. Also, it is to be appreciated that not only the principles, viewpoints, and embodiments of the present invention, but all detailed descriptions listing the particular embodiments are intended to include structural and functional equivalents.

Other objectives, particular advantages, and novel features of the present invention will further be clarified by the detailed descriptions and preferred embodiments set forth below with reference to the accompanying drawings. In describing the invention, detailed explanation of the prior art will be omitted when it is deemed to unnecessarily obscure the crux of the invention. Numerals used in the description (for example, a first, a second, etc.) are merely used to distinguish equal or similar items in an ordinal manner.

Hereinafter, embodiments of the invention will be described in detail with reference to the accompanying drawings.

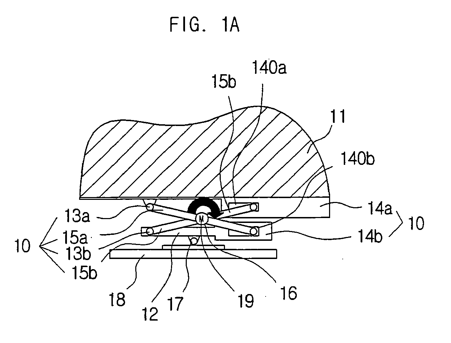

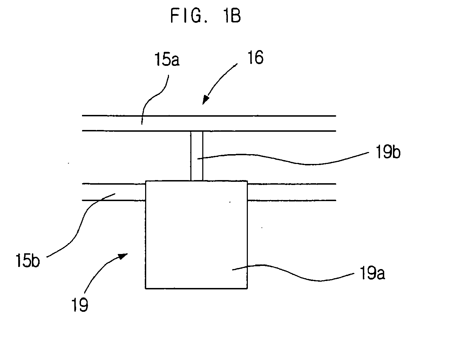

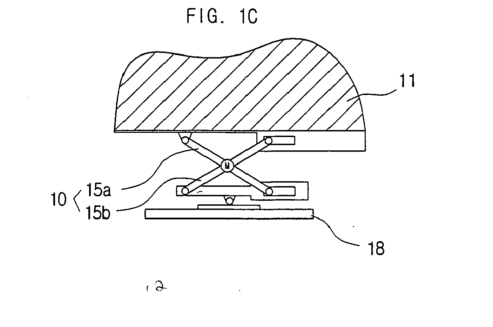

Fig. 1a is a plan view of a display extension apparatus in accordance with a first embodiment of the present invention, Fig. 1b is a magnified sectional view of an intersection of the display extension apparatus of Fig 1a, and Fig. 1c illustrates the operation of the display extension apparatus in accordance with a first embodiment of the present invention.

Referring to Figs 1a to 1c, a support 11 is coupled with a link portion 10, which supports a movable body 12. While the support 11 is illustrated as having a particular form in the detailed description and figures, it would be appreciated by the person skilled in the art that the support may include any form of medium such as an anchor bolt, a bracket, braces, or plates used for coupling the link portion 10 to the wall. The support 11 is sufficiently strong to support the weight of the link portion 10, the movable body 12, and the display 18.

The link portion 10 includes a first hinge member 13a, a second hinge member 13b, a first guide member 14a, a second guide member 14b, a first link element 15a, a second link element 15b, and an intersection 16.

The first hinge member 13a is coupled to the support 11 and, one end of the first link element 15a is movably attached to the first hinge member 13a. The support 11 is also coupled to the first guide member 14a. As shown in Fig. 1a, the first hinge member 13a is separated from the first guide member by a predetermined distance. A slot 140a is formed in the first guide member 14a and the second link element 15b is movably attached to the slot 140a, so as to enable linear movements of the second link element 15b.

The second link element 15b is pivotally connected to the first link element 15a at the intersection 16. The intersection 16 is located at the middle section of the second link element 15b and first link element 15a. Moreover, the driving part 19 is coupled to the intersection 16 such that movements of the first and second link elements 15a, 15b are rotatable by driving part 19.

The other end of the first link element 15a is coupled with a slot 140b of a second guide member 14b so as to move rectilinearly, and the other end of the second link element 15b is movably attached to the movable body 12.

As shown in Fig 1a, the second guide member 14b may be coupled with the movable body 12 as a single body or as separate bodies. As shown in the figure, a universal joint 17 is coupled to the movable body 12, and the display 18 is coupled to the universal joint 17 so as to enable movements of the display 18.

Fig. 1b is a magnified sectional view of the intersection 16 in Fig 1a. At the intersection 16, a rotary part 19b of the driving part 19 is coupled with the first link element 15a, and the motor unit 19a of the driving part 19 is coupled with the second link element 15b. Thus, when the rotary part 19b is rotated, the first link element 15a and the second link element 15b move together about the intersection 16. Consequently, as shown in Fig. 1c, the movable body 12 joined to the link portion 10 can be moved towards or away from the support 11. In an alternative arrangement, the motor unit 19a may be coupled with the first link element 15a, and the rotary part 19b may be coupled with the second link element 15b.

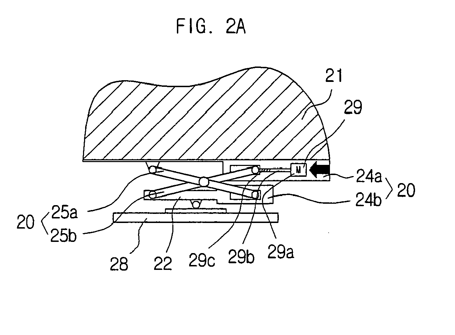

Fig. 2a is a plan view of a display extension apparatus according to a second embodiment of the present invention, and Fig. 2b illustrates the operation of a display extension apparatus according to the second embodiment of the present invention. The display extension apparatus according to a second embodiment of the present invention has the same or similar structure as the first embodiment, except that the second embodiment includes a driving part 29. Accordingly, these differences are explained below.

The driving part 29 in this embodiment includes a motor unit 29a, and an extension portion 29c coupled to a driving shaft 29b of the motor unit 29a. The extension portion 29c extends or retracts in the longitudinal direction according to the rotation of the driving shaft 29b. As shown in the figure, the motor unit 29a is joined to the first guide member 24a, and is coupled to one end of a second link element 25b. Therefore, when the driving shaft 29b is rotated, one end of the second link element 25b is moved rectilinearly, thereby moving the whole link portion 20. In an alternative arrangement, the motor unit 29a may be coupled with the second guide member 24b. Figure 2b shows the link portion 20 in an extended position.

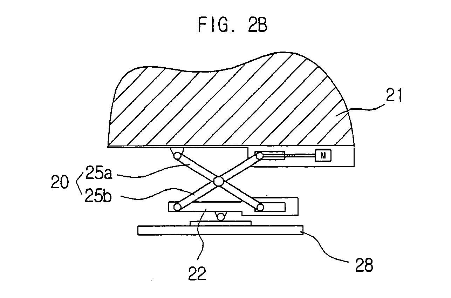

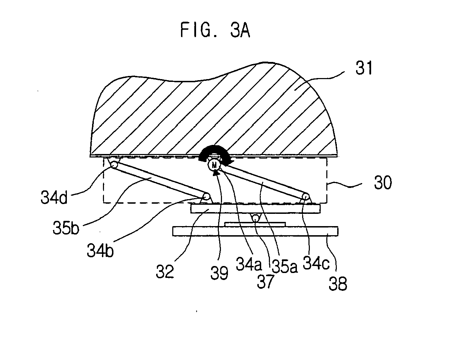

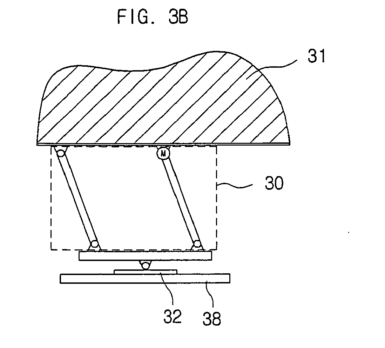

Fig. 3a illustrates a plan view of a display extension apparatus in accordance with a third embodiment of the present invention, and Fig. 3b illustrates the operation of the display extension apparatus according to the third embodiment of the present invention. In Figs. 3a and 3b, a link portion 30, a support 31, a movable body 32, a first hinge part 34a, a second hinge part 34b, a third hinge part 34c, a fourth hinge part 34d, a first link element 35a, a second link element 35b, a universal joint 37, a display 38, and a driving part 39 are illustrated.

In the present embodiment, the first link element 35a and second link element 35b are movably attached to the movable body 32 and the support 31. The hinge parts 34a-34d and the link elements 35a and 35b enable the movable body 32 to move towards or away from the support 31 in a swinging motion.

Meanwhile, the driving part 39 is coupled with one of the hinge parts 34a-34d. The driving part 39 also includes a motor unit 19a and a rotary part 19b similar to those illustrated in Fig 1b. The first link element 35a and second link element 35b are rotated through the rotational force of the rotary part. While this embodiment illustrates the arrangement of connecting the driving part 39 with the first hinge member 34a, other arrangements , such as connecting the driving part 39 with other hinge members 34b-34d are also possible.

Fig. 3b shows the first and second link elements 35a, 35b in the extended position. The rest of the elements in this embodiment function the same way as the elements illustrated in the first embodiment.

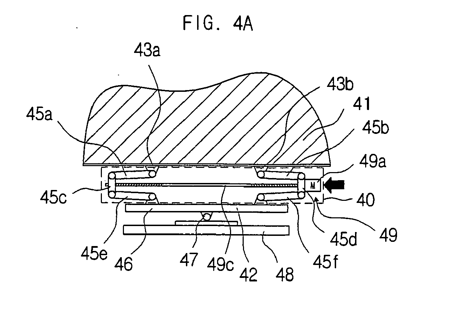

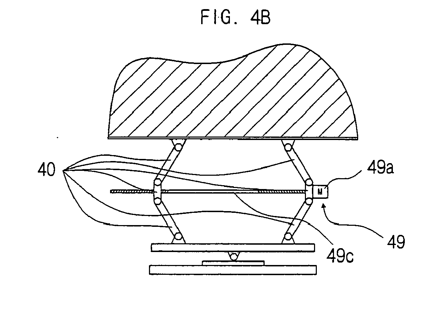

Fig. 4a is a plan view of a display extension apparatus in accordance with a fourth embodiment of the present invention, and Fig. 4b illustrates the operation of a display extension apparatus in accordance with the fourth embodiment of the present invention. In Figs. 4a and 4b, a link portion 40, a support 41, a movable body 42, a first link element 45a, a second link element 45b, a third link element 45c, a fourth link element 45d, a fifth link element 45e, a sixth link element 45f, a universal joint 47, a display 48, a driving part 49, a motor unit 49a, and a worm gear member 49c are illustrated.

In the present embodiment, the first and second hinge members 43a, 43b are coupled to the support 41. One end of the first link element 45a is coupled to the first hinge member 43a. Similarly, one end of the second link element 45b is coupled to the second hinge member 43b. As shown in Figs 4a and 4b, this enables rotation to be achieved within a constant angle. The other link members 45c-45d are also movably attached.

In the present embodiment, the driving part 49 includes the motor unit 49a, rotary part (not shown), and the worm gear member 49c. The motor unit 49a is attached and fixed to the fourth link element 45d, and the worm gear member 49c is coupled with (and penetrated through) the third link element 45c. Thus, the third link element 45c is capable of moving towards or away from the fourth link element 45d depending on the rotational direction of the worm gear member 49c. Consequently, the link portion 40 can be retracted or extended. Fig. 4b shows the driving part 49 in its extended state as the third link element 45c and fourth link element 45d move toward each other. The same function can also be achieved in the case where the motor unit 49a is fixed to the third link element 45c and the worm gear member 49c is coupled to the fourth link element 45d. Detailed descriptions will not be provided for the remaining elements, as they are substantially the same as those described in the first embodiment of the present invention.

While six link elements are used in this embodiment, a structure having four link elements may also be used to achieve the same performance. The four link elements may be movably attached in a rhombus shape, and the link elements facing each other may be joined with a driving part 49 that includes the worm gear member 49c.

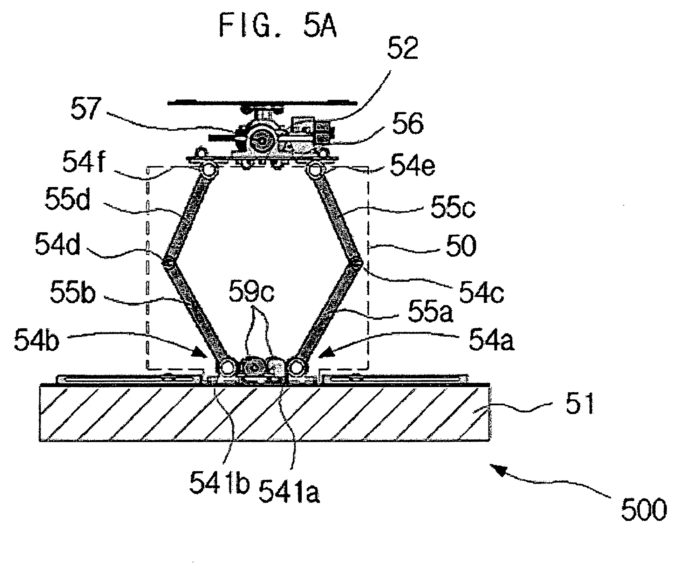

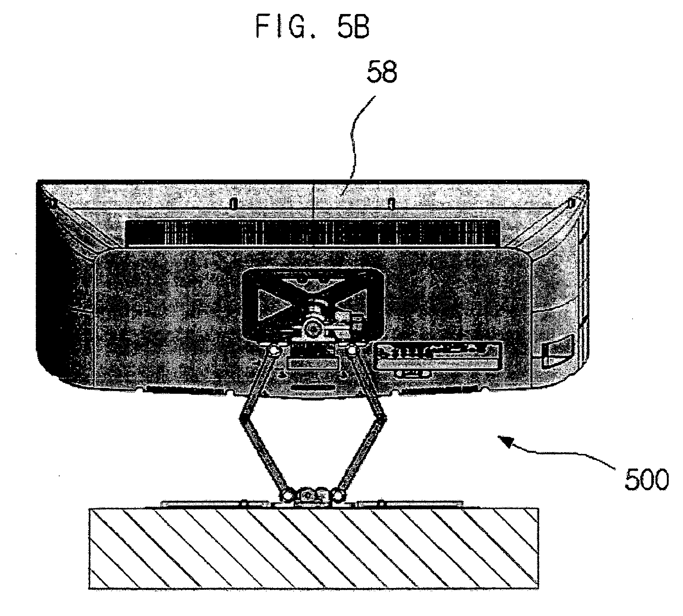

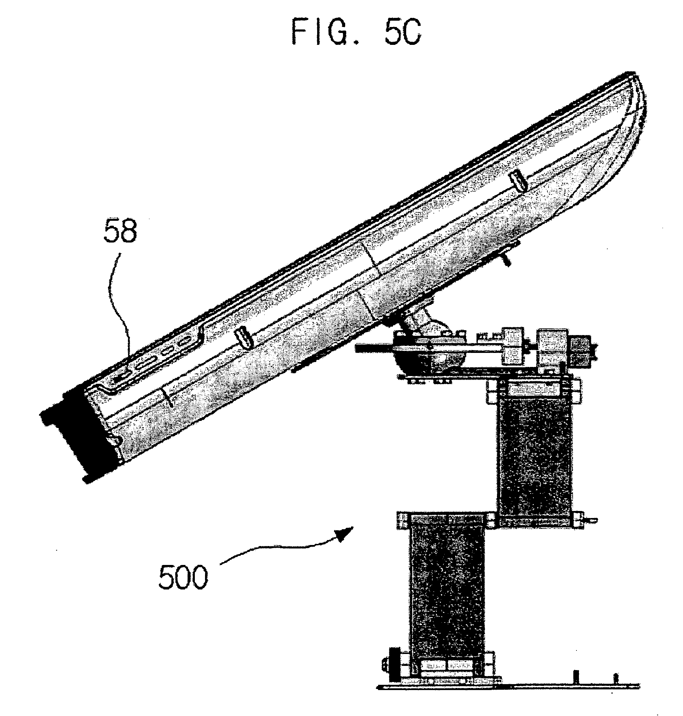

Fig. 5a is a plan view of a display extension apparatus in accordance with a fifth embodiment of the present invention, Fig. 5b is a plan view of a display extension apparatus according to the fifth embodiment of the present invention, and Fig. 5c illustrates a display extension apparatus joined to a display according to the fifth disclosed embodiment of the invention. In Figs. 5a, 5b, and 5c, a link portion 50, a support 51, a movable body 52, a first hinge member 54a, a second hinge member 54b, a third hinge member 54c, a fourth hinge member 54d, a fifth hinge member 54e, a sixth hinge member 54f, a first link element 55a, a second link element 55b, a third link element 55c, a fourth link element 55d, a universal joint 57, a display 58, idle gears 59c, and a display extension apparatus 500 are illustrated.

The present embodiment illustrates a display extension apparatus using two pairs of link elements. One end of the first link element 55a and one end of the second link element 55b are respectively moveably attached with the first and second hinge members 54a, 54b. The first and second hinge members 54a, 54b are coupled to the support 51. The other end of the first link element 55a is coupled to the third link element 55c, and the other end of the second link element 55b is coupled to the fourth link element 55d.

While the driving part 59 is joined with the hinge members 54a-54f, in the present embodiment, an even number of idle gears 59c are coupled between the first gear 541a and the second gear 541b are attached respectively to the first hinge member 54a and second hinge member 54b. The driving part is coupled with one of the first gear 541 a, second gear 541 b, and idle gears 59c, to supply power thereto. The even number of idle gears 59c make the second gear 541 b and first gear 541a rotate in opposite directions, so as to enable the link elements operate smoothly without a high load concentration on the link elements.

In the present embodiment, the first gear 541a and second gear 541b are respectively coupled with the first hinge member 54a and second hinge member 54b, and the even number of idle gears 59c and the driving part 59 are coupled between the first hinge member 54a and second hinge member 54b. In an alternative arrangement, an even number of idle gears 59c, and the driving part 59 may be coupled between the fifth hinge member 54e and sixth hinge member 54f in a similar arrangement. Meanwhile, the link elements may be driven without the idle gears 59c in an arrangement where the first gear 541a is directly coupled with the second gear 541 b. Figs. 5b and 5c illustrate respectively a plan view and a side view of the display extension apparatus joined to the display 58.

Detailed descriptions will not be provided for the rest of the elements in the present embodiment, because the operation principles of the rest of the elements of the present embodiment are substantially similar to those of the first embodiment.

The embodiments described above relate to automatic modes of controlling the display extension apparatus using a controller, such as a remote controller. However, the display extension apparatus of the present invention could also be manually extended. However, this may result in the rotor of the motor being damaged by forced rotation. Therefore, the structure of the rotary part for preventing this damage is illustrated below.

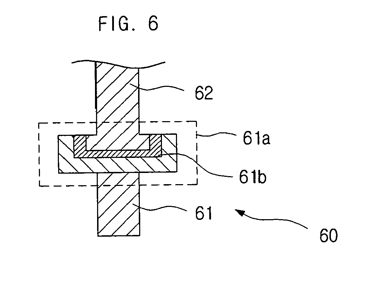

Fig. 6 is a cross-sectional view of a rotary part of a driving part according to a sixth embodiment of the present invention. Referring to Fig. 6, a rotary part 60, a driving shaft 61, a clutch unit 61 a, and a driven shaft 62 are illustrated.

The present embodiment describes a mode which may be applied to the rotary part of the driving part used in the first to fifth embodiments of the present invention. The driving shaft 61 shown in Fig. 6 is coupled to the motor unit 19a of the driving part 10 in Fig. 1b. Accordingly, the driving shaft 61 may also be part of the rotary shaft of the motor. The driving shaft 61 is coupled to the driven shaft 62 at the clutch unit 61 a. As shown in Fig. 6, the clutch unit 61b for controlling the frictional force may be coupled to the driving shaft 61 as a single body. Moreover, the clutch unit 61b is coupled with the driven shaft 62. A washer 61b is interposed between the clutch unit 61b and the driven shaft 62, to maintain a constant frictional force.

When the rotary part 60 is operated, the driving force of the motor running the link portion in the first to fifth embodiments is smaller than the frictional force of the clutch unit 61b, such that slipping between the clutch unit 61b and the driven shaft 62 will not occur. However, when the driven shaft 62 is rotated due to forced movement of the link portion, the frictioned force of the clutch unit 61b is essentially smaller than the cogging torque of the motor, and as a result slipping occurs. Consequently, the possibility of forced rotation of the motor by external force is reduced.

According to certain aspects of the present invention set forth as above, the display can be extended from the support so as to attain a desired rotation angle of the display. This extending and rotating operation can be performed manually or automatically. The durability of the apparatus is maintained even with manual rotation.

While the invention has been described with reference to the disclosed embodiments, it is to be appreciated that those skilled in the art can change or modify the embodiments without departing from the scope and spirit of the invention or its equivalents as stated below in the claims.

## Claims

1. A display extension apparatus comprising:
a support;
a link portion having one end coupled to the support;
a driving part coupled to a joining member of the link portion, the driving part being operable to control movements of the link portion; and
a movable body coupled to the other end of the link portion, such that the movable body is separated from the support in accordance with the driving of the link portion.

2. A display extension apparatus in accordance with claim 1, wherein the link portion comprises:
a first hinge member coupled to the support;
a second hinge member coupled to the movable body;
a first link element having one end rotatably coupled to the first hinge member; and
a second link element having one end rotatably coupled to the second hinge member.

3. A display extension apparatus in accordance with claim 1 or claim 2, wherein the driving part comprises:
a motor unit; and
a rotary part coupled to a driving shaft of the motor unit,
the motor unit is coupled to the first hinge member or the second hinge member,
wherein the rotary part is coupled to the first link element or the second link element to be in correspondence with the first link element or the second link element respectively.

4. A display extension apparatus in accordance with any preceding claim, wherein the link portion comprises:
a first guide member coupled to the support, said first guide member being separated from the first hinge member by a predetermined distance; and
a second guide member coupled to the movable body, said second guide member being separated from the second hinge member by a predetermined distance,
and wherein the first link element and the second link element intersect each other,
and the other end of the first link element is movably coupled to the second guide element, and the other end of the second link element is movably coupled to the first guide element.

5. A display extension apparatus in accordance with any preceding claim, wherein the driving part comprises:
a motor unit; and
a rotary part coupled to a driving shaft of the motor unit;
and wherein the motor unit is coupled to the first link element or the second link element where the first link element and the second link element intersect, and the rotary part is coupled to that one of the first link element or the second link element to which the motor unit is not coupled to.

6. A display extension apparatus in accordance with claim 4, wherein the driving part comprises:
a motor unit; and
an extension portion coupled to a driving shaft of the motor unit and configured to extend along the length direction of the driving shaft according to the rotation of the motor unit,
and wherein the motor unit is coupled to the first guide member or the second guide member, the extension portion is coupled to one end of the second link element or the other end of the first link element to be in correspondence with the first guide member or the second guide member respectively.

7. A display extension apparatus in accordance with claim 2, wherein the link portion comprises:
a third hinge member coupled to the support while separated from the first hinge member by a predetermined distance;
a fourth hinge member coupled to the movable body while separated from the second hinge member by a predetermined distance;
a third link element having one end rotatably coupled to the other end of the first link element by way of an interposed fifth hinge member and having the other end rotatably coupled to the fourth hinge member; and
a fourth link element having one end rotatably coupled to the other end of the second link element by way of an interposed sixth hinge member and having the other end rotatably coupled to the third hinge member.

8. A display extension apparatus in accordance with claim 7, further comprising a worm gear member, coupled with the fifth hinge member and the sixth hinge member, for adjusting the distance between the sixth hinge member and the fifth hinge member by rotating the axis of the worm gear member in the longitudinal direction.

9. A display extension apparatus in accordance with claim 8, wherein the driving part comprises:
a motor unit; and
a rotary part coupled to a driving shaft of the motor unit,
and wherein the rotary part is coupled to the worm gear member.

10. A display extension apparatus in accordance with claim 8, wherein the worm gear member comprises:
a first rod having a worm gear coupled with the fifth hinge member formed on one end;
a second rod having a worm gear coupled with the sixth hinge member formed on one end; and
a tube having the other end of the first rod inserted in one end thereof and having the other end of the second rod inserted in the other end thereof,
and wherein a guide groove or a guide projection is formed in the longitudinal direction along the inner perimeter of the tube, and a hole is formed at the other end of the first rod and the other end of the second rod in correspondence with the guide projection.

11. A display extension apparatus in accordance with claim 7, further comprising a first gear coupled to the outer perimeter of the first hinge member, and a second gear coupled to the first gear and the outer perimeter of the third hinge member.

12. A display extension apparatus in accordance with claim 7, wherein the display extension apparatus further comprises a first gear coupled to the outer perimeter of the second hinge member, and a second gear coupled to the first gear and the outer perimeter of the fourth hinge member.

13. A display extension apparatus in accordance with claim 11 or claim 12, wherein the first gear and the second gear are coupled by an even number of idle gears.

14. A display extension apparatus in accordance with claim 11 or claim 12, wherein the driving part comprises:
a motor unit; and
a rotary part coupled to a driving shaft of the motor unit,
and wherein the rotary part is coupled to the first gear or the second gear.

15. A display extension apparatus of claim 14, wherein the rotary part comprises:
a clutch unit coupled to the driving shaft; and
a driven shaft positioned in contact with the clutch unit,
and wherein the driving force of the motor unit is smaller than the frictional force between the driven shaft and the clutch unit.

16. A display extension apparatus of claim 12, wherein the driving part comprises:
a motor unit; and
a rotary part coupled to a driving shaft of the motor unit,
and wherein the motor unit is coupled to the other end of the first link element or one end of the third link element,
and the rotary part is coupled to that one of the one end of the third link element or the other end of the third link element to which the motor unit is not coupled.

17. A display extension apparatus of claim 12, wherein the driving part comprises:
a motor unit; and
a rotary part coupled to a driving shaft of the motor unit,
and wherein the motor unit is coupled to the other end of the second link element or one end of the fourth link element,
and the rotary part is coupled to that one of the one end of the fourth link element or the other end of the second link element to which the motor unit is not coupled.

18. A display extension apparatus of claim 9, wherein the rotary part comprises:
a clutch unit coupled to the driving shaft; and
a driven shaft positioned in contact with the clutch unit,
and wherein the driving force of the motor unit is smaller than the frictional force between the driven shaft and the clutch unit.

19. A display extension apparatus in accordance with claim 18, wherein the frictional force between the driven shaft and the clutch unit is smaller than the cogging torque of the motor unit.

20. A display extension apparatus in accordance with claim 18, further comprising one or more washers interposed between the clutch unit and the driven shaft.
